(19) Europäisches Patentamt
European Patent Office
Office européen des brevets

(11) **EP 2 361 333 B1**

(12) **EUROPEAN PATENT SPECIFICATION**

(45) Date of publication and mention
of the grant of the patent:
**26.02.2014 Bulletin 2014/09**

(51) Int Cl.:
*E02F 5/14* (2006.01)        *E02F 5/10* (2006.01)
*H02G 1/10* (2006.01)

(21) Application number: **09785442.6**

(86) International application number:
**PCT/GB2009/050972**

(22) Date of filing: **04.08.2009**

(87) International publication number:
**WO 2010/015851 (11.02.2010 Gazette 2010/06)**

(54) **SUB-SEA TRENCH EXCAVATING APPARATUS**

UNTERWASSERGRABENAUSHUBVORRICHTUNG

APPAREIL D'EXCAVATION DE TRANCHÉE SOUS-MARIN

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **06.08.2008 GB 0814316**

(43) Date of publication of application:
**31.08.2011 Bulletin 2011/35**

(73) Proprietor: **IHC Engineering Business Limited
Riding Mill
Northumberland NE44 6EG (GB)**

(72) Inventor: **MANCHESTER, Jonathan, Ralph
Tyne and Wear NE39 2JQ (GB)**

(74) Representative: **Harrison Goddard Foote LLP
Saviour House
9 St. Saviourgate
York
YO1 8NQ (GB)**

(56) References cited:
**EP-A- 0 816 574     GB-A- 1 538 743
US-A- 4 280 289**

**Description**

The present invention relates to apparatus for excavating a trench. In particular, but not exclusively, the invention relates to apparatus for excavating a subsea trench for elongated members such as cables or pipes.

Underwater cables, umbilicals, pipe-work and the like, hereinafter referred to as elongated members, are typically laid within a trench to avoid the risk of damage, such as may be caused by boats using trawling apparatus, anchors, and so on. The requirement to bury these elongated members used to be limited to a relatively short distance offshore and in only shallow seas, but the increasing use of deep water trawling and other offshore activities, such as oil and gas exploration has led to the burial of deep water elongated members as well. The excavating of a trench can be performed using high velocity water jets, ploughs or mechanical cutting apparatus. Mechanical cutters are typically required for harder soil types.

Subsea trench excavating machines often capture the assembled elongated members, such as pipe-work, then dig the trench and then place the pipeline in the trench in a single operation. The pipeline tends to be stiff and so the distance between the pickup point of the pipeline in front of the excavating machine and the touchdown point behind the excavating machine can be substantial relative to the length of the excavating machine. The trench is typically back-filled by the natural action of currents in the water over a period of time or by the forced collapse of the trench wall, or by mechanical means transporting soil into the trench.

The elongated members tend to be stiff. Grading of the bottom of a trench is necessary to ensure that the rate of change of the trench profile is minimised to reduce catenary induced bending stresses on elongated members. It is therefore of prime importance to the longevity of the installations. It is desirable to provide apparatus which provides improved grading of the trench to minimise bending stresses on elongated members.

US 6016616 discloses a land-based system which uses a ground mounted laser to enable a trenching vehicle moving over the ground to maintain the trench at a depth relative to the laser beam, independent of the ground conditions. However, the disclosed laser system is not suitable for subsea use due to the ineffective range of the laser beam.

US 4280289 discloses a trenching machine for entrenching a pipeline under the bed of a body of water. The trenching machine is adapted to be driven along the pipeline by a fore and aft set of drive wheels which exert a nominal pressure on the pipeline and comprises cutting nozzles positioned on adjustable nozzle supports to cut a trench. The depth and size of the trench can be varied by raising or lowering the cutting nozzles through detachment and reattachment to the adjustable nozzle supports. This document forms the basis for the preambles of claims 1 and 13.

Load balanced pipe support systems are common in many subsea trenching apparatus. These support systems are used to minimise bending stresses on the elongated members as they are being carried by the excavating machine prior to placing in the trench. The support systems are not used to control the depth of the excavated trench.

According to a first aspect of the present invention there is provided a trench excavating apparatus for excavating a trench and placing an elongated member within the excavated trench, the apparatus comprising:

a movable body having at least one elongated member support for carrying the elongated member;
an excavating device connected to the movable body for excavating the trench, the excavating device being adjustable to provide a varying trench depth;
measuring means for measuring a parameter relating to the elongated member as it is supported by the elongated member support; and
excavating device adjustment means comprising control means and an actuator wherein said control means, in response to changes in the measured parameter, causes the actuator to adjust the position of the excavating device thereby to vary the depth of the excavated trench.

The trench excavating apparatus may comprise two elongated member supports. The two elongated member supports may be spaced apart along the longitudinal axis of the elongated member.

The measuring means may comprise load measuring means. The measured parameter may comprise the load exerted on at least one elongated member support by the elongated member.

Alternatively, the measuring means may comprise angle measuring means. The measured parameter may comprise the angle of the elongated member as it is supported by the elongated member support. Alternatively, the measuring means may comprise displacement measuring means. The measured parameter may comprise a displacement of the elongated member as it is supported by the elongated member support.

The trench excavating apparatus may be a subsea trench excavating apparatus. The trench excavating apparatus may be towable or may include locomotive means. The trench excavating apparatus may be remotely operated. The elongated member may be a pipe or pipeline.

The excavating device may comprise a mechanical digger. The excavating device may have a digging blade or plough. The excavating device may extend downwards from the movable body at a digging angle. The excavating device may be pivotably mounted to the movable body. The excavating device may be pivotable relative to the movable body so as to adjust the digging angle to provide a varying trench depth. Alternatively, the excavating device may be linearly retractable relative to the movable body so as to provide a varying trench depth.

In a particular embodiment when the trench excavating apparatus includes at least two elongated member supports, each elongated member support may be located at or near one end of the movable body. One or both elongated member supports may be movable relative to the movable body to vary the height of the supported elongated member relative to ground level, The or each elongated member support may be pivotable or retractable relative to the movable body. The trench excavating apparatus may include elongated member support adjustment means adapted to vary the height of one or both of the elongated member supports relative to ground level in response to changes in the measured parameter.

The excavating device adjustment means comprises an actuator, such as a motor or a hydraulic piston arrangement, for moving the excavating device relative to the movable body. The excavating device adjustment means comprises a controller. The controlly may receive data from the measuring means and responsively send a signal to the actuator to move the excavating device. Preferably the controller may be adapted to receive position data relating to the height of at least one elongated member support and to send a signal to the actuator to move the excavating device in response to the received position data.

The measuring means may comprise a load cell provided at one or more elongated member supports. Alternatively, the measuring means may comprise an accelerometer provided at one or more elongated member supports. The measuring means may also include a processor for deriving load data from the acceleration data. Alternatively one or more of the elongated member supports may comprise a hydraulic cylinder and the measuring means may comprise means for deriving load data from cylinder pressure data. Alternatively, the measuring means may comprise one or more of various means of deriving parameter data which are known in the art.

According to a second aspect of the present invention there is provided a method of excavating a trench and placing an elongated member within the excavated trench, the method comprising the steps of:

supporting the elongated member using at least one elongated member support;
excavating the trench using an excavating device;
measuring a parameter associated with the elongated member as it is supported by the one or more elongated member supports; and
using excavating device adjustment means comprising control means and an actuator to respond to changes in the measured parameter and cause the position of the excavating device to be adjusted varying the depth of the excavated trench.

The method may include supporting the elongated member using at least two elongated member supports which are spaced apart along the longitudinal axis of the elongated member.

The method may include locating the excavating device between the two elongated member supports.

The parameter may be the load exerted on one or more elongated member supports by the elongated member.

The method may include excavating the trench underwater. The method may include towing the trench excavating apparatus. The method may include remotely operating the excavating apparatus.

The method may include moving the excavating device relative to the movable body to provide a varying trench depth.

The method may include moving one or more of the elongated member supports relative to the movable body to vary the height of the supported elongated member relative to ground level. The method may include adjusting the height of one or more of the elongated member supports relative to ground level in response to changes in the measured parameter.

The method may include measuring the parameter and responsively moving the excavating device. Alternatively or in addition, the method may include adjusting the height of one or more of the elongated member supports and moving the excavating device in response to the variation in height of one or both of the elongated member supports.

Embodiments of the present invention will now be described, by way of example only, with reference to the accompanying drawings in which:

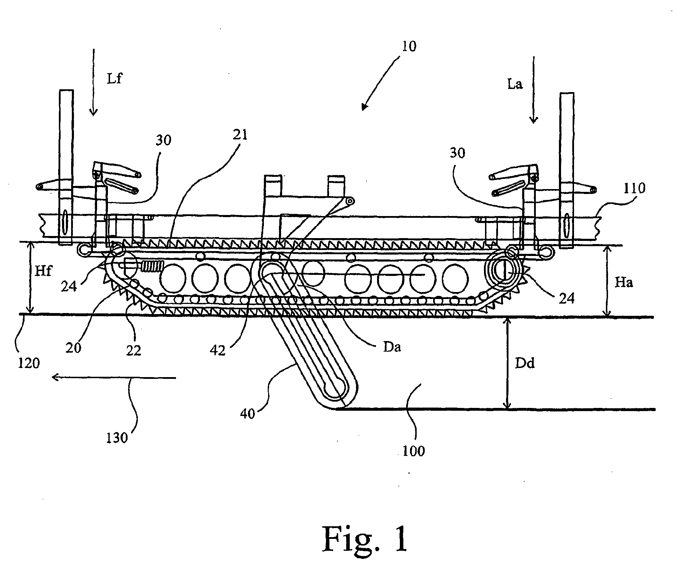

Figure 1 is side view of a trench excavating apparatus.

Figure 1 shows a subsea trench excavating apparatus 10 for excavating a trench 100 and placing an elongated member in the form of a pipe 110 within the excavated trench 100. The apparatus 10 can be towed along at ground level 120 (on the sea bed) in a direction of travel 130 by a subsea vehicle (not shown).

The apparatus 10 has a movable body 20 which includes a platform 21 mounted on a continuous track 22 and roller 24 system. The movable body 20 has a forward end and an aft end with respect to the direction of travel 130. Mounted on the platform 21, at each end of the movable body 20, is an elongated member support 30 for carrying the pipe 110. The two elongated member supports 30 are therefore spaced apart along the longitudinal axis of the pipe 110 and, equivalently, are spaced apart in the direction of travel 130 of the apparatus 10.

An excavating device 40 in the form of a mechanical cutting blade is pivotably connected via a pivot point 42 to the movable body 20 for excavating the trench 100. The excavating device 40 extends downwards from the movable body at a digging angle Da. Excavating device adjustment means comprising an actuator in the form of a hydraulic piston arrangement (not shown) is provided for moving the excavating device 40 relative to the movable body 20. The excavating device 40 can be pivoted about the pivot point 42 to vary the digging angle Da and thus the trench depth Dd.

Measuring means in the form a load cell (not shown) is provided at each elongated member support 30 for measuring a parameter, which is the load exerted on each elongated member support by the pipe 110.

When the apparatus 10 is level on the sea bed, the load exerted by the pipe 110 on each elongated member support 30 will be substantially equal because of load balancing operations, and so the bending stress on the pipe 110 being carried will be minimized. However, as the apparatus 10 moves along the sea bed, the apparatus 10 will tend to pitch upwards (considering the forward end of the apparatus 10) or downwards depending on the topography of the sea bed. Upward pitching of the apparatus 10 will cause the load Lf on the forward elongated member support 30 to increase and the load La on the aft elongated member support 30 to decrease. Similarly, downward pitching of the apparatus 10 will cause the load La on the aft elongated member support 30 to increase and the load Lf on the forward elongated member support 30 to decrease. In either case, the bending stress on the pipe 110 being carried will increase due to an increased reaction force from one of the elongated member supports 30.

Also, over long quasistatic sea beds, the apparatus 10, and thus both of the front and aft elongated member supports, may rise or fall at the same time as the sea bed rises or falls, with a minimal differential load between the two elongated member supports. However, the total load on both elongated member supports will increase as the sea bed rises or decrease as the sea bed falls. In the case of the total load increasing, the bending stress on the pipe 110 being carried will again increase.

To accommodate this, each elongated member support 30 is movable upwards and downwards relative to the movable body 20 to vary the height of the supported pipe 110 relative to ground level 120. Elongated member support adjustment means in the form of an actuator (not shown) can vary the height of each elongated member support 30 relative to ground level 120 in response to changes in the measured load signal generated by the load cells.

When the apparatus 10 pitches upwards, the forward elongated member support 30 will move downwards to decrease the height Hf of the forward elongated member support 30, and the aft elongated member support 30 will move upwards to increase the height Ha of the aft elongated member support 30, so that the height of the supported pipe 110 is substantially the same at each elongated member support 30. It will be apparent to the skilled reader that the variation of the height of each elongated member support 30 is proportional (or inversely proportional) to the change in orientation of the movable body 20 from the horizontal as the apparatus 10 moves upwards or downwards.

Similarly, when the the apparatus 10, and thus both of the front and aft elongated member supports, rise as the sea bed rises, both the forward and aft elongated member supports 30 will move downwards to decrease the height of both supports 30. This will decrease the total load on both elongated member supports 30.

Either the actual change in orientation of the movable body 20 (which can be derived from changes in the measured load at the elongated member supports 30), or the change in the total load at the elongated member supports 30, or the resulting change in the height of each elongated member support 30 can be used to produce a suitably graded trench 100 which minimises the bending stresses on the pipes 110 once they have been placed in the trench 100. Therefore, the apparatus 10 includes excavating device adjustment means which is adapted to vary the depth Dd of the excavated trench 100 in response to changes in one of these parameters (therefore the depth Dd is varied either directly or indirectly in response to changes in the measured load at the elongated member supports 30).

In a particular embodiment, a rising incline of the sea bed causes upward movement of the apparatus 10 which causes the load Lf on the forward elongated member support 30 to increase and the load La on the aft elongated member support 30 to decrease. A controller (not shown) receives load data from the load measuring means, filters this data to remove spikes caused by vibrations and then determines the average change in load. The controller then sends a signal to proportionally decrease the height Hf of the forward elongated member support 30 and increase the height Ha of the rear elongated member support 30. The controller also sends a signal to pivot the excavating device 40 in a clockwise direction as shown in Figure 1 to increase the digging angle Da and thus the trench depth Dd. The degree of pivoting corresponds to the change in orientation of the apparatus 10.

The controller may use an internal algorithm or consult a lookup table in an associated memory to derive the degree of pivoting required. Filtering of the load data will produce some gradual grading of the trench 100 which is required to minimize bending stresses on the pipe 110 when in the trench 100. However, further filtering or smoothing algorithms can improve the grading of the trench 100. The manner and degree of filtering may be selected to filter data to remove vibrational spikes but not short term undulations representing actual movement of the apparatus 10 such as the apparatus 10 travelling over a rock. If the apparatus 10 did not react to these short term undulations, the undulations would be produced at the bottom of the excavated trench which would increase bending stresses on the pipe 100.

In the continuous trenching process the total load applied to both the elongated member supports is constant:

$$L_t = L_F + L_A \qquad \text{with} \qquad L_A = L_F$$

This load, when balanced between the two elongated member supports, will maintain the position of the pipe 110 relative to the ground.

In quasi static conditions, the average height remains constant.

$$\overline{H}_{quasi\_static} = \left( \frac{H_F + H_A}{2} \right)_{quasi\_static}$$

Hence, as the apparatus 10 moves over rough ground the heights of the elongated member supports 30 will alter to maintain the load balancing and hence the relative position of the pipe 110 to the ground.

$$\overline{H}_{instantaneous} = \left( \frac{H_F + H_A}{2} \right)_{instantaneous}$$

If $\overline{H}$ decreases for a given total load Lt, then this implies the apparatus 10 is rising with respect to the pipe 110. If the excavating device 40 is positioned directly between the elongated member supports 30 then the excavating device 40 must increase its depth, to compensate for the apparatus 10 movement, to maintain the grading of the bottom of the trench by the difference.

$$D_{instantaneous} = D_d + \overline{H}_{quasi\_static} - \overline{H}_{instantaneous}$$

By measuring the relative position of the pipe 110 with respect to the apparatus 10 including, but not restricted to, elongated member support load reactions and relative heights of the elongated member support 30, it is possible to adjust the effective depth of the excavating device 40 to take account of the pitching and vertical movement of the apparatus 10 over the local topography of the sea bed.

It is further possible to determine the movement of sea bed prior to the sea bed having a direct effect on the apparatus 10. By using this information about the seabed topography, it is possible to smooth grading changes by altering the digging depth Dd. It is also possible to adjust the heading and roll of the trenching system by measuring the transverse relative position and loads of the pipe 110 to the apparatus 10.

Whilst specific embodiments of the present invention have been described above, it will be appreciated that departures from the described embodiments may still fall within the scope of the present invention. For instance, only the load at one of the conduit supports 30 may be measured. Similarly, only the height of one of the conduit supports 30 may be varied.

**Claims**

1.  A trench excavating apparatus (10) for excavating a trench and placing an elongated member (110) within the excavated trench, the apparatus comprising:

    a movable body (20) having at least one elongated member support (30) for carrying the elongated member (110);
    an excavating device (40) connected to the movable body (20) for excavating the trench, the excavating device (40) being adjustable to provide a varying trench depth;
    measuring means for measuring a parameter relating to the elongated member (110) as it is supported by the elongated member support (30); and **characterised by**

excavating device adjustment means comprising control means and an actuator wherein said control means, in response to changes in the measured parameter, causes the actuator to adjust the position of the excavating device (40) thereby to vary the depth of the excavated trench.

2. A trench excavating apparatus (10) as claimed in Claim 1, comprising two elongated member supports (30), and wherein the two elongated member supports are spaced apart along the longitudinal axis of the elongated member (110).

3. A trench excavating apparatus (10) as claimed in Claim 1 or 2, wherein the measuring means comprises load measuring means, and wherein the measured parameter comprises the load exerted on at least one elongated member support (30) by the elongated member (110); and/or the measuring means comprises angle measuring means, and wherein the measured parameter comprises the angle of the elongated member as it is supported by the elongated member support (30); and/or the measuring means comprises displacement measuring means, and wherein the measured parameter comprises a displacement of the elongated member as it is supported by the elongated member support (30).

4. A trench excavating apparatus (10) as claimed in any preceding claim, wherein the trench excavating apparatus is a subsea trench excavating apparatus, and preferably wherein the trench excavating apparatus is towable or includes locomotive means.

5. A trench excavating apparatus (10) as claimed in any preceding claim, wherein the elongated member (110) comprises a pipe or pipeline.

6. A trench excavating apparatus (10) as claimed in any preceding claim, wherein the excavating device (40) comprises a mechanical digger.

7. A trench excavating apparatus (10) as claimed in any preceding claim, wherein the excavating device (40) extends downwards from the movable body (20) at a digging angle.

8. A trench excavating apparatus (10) as claimed in Claim 7, wherein the excavating device (40) is pivotably mounted to the movable body (20) and is pivotable relative to the movable body so as to adjust the digging angle to provide a varying trench depth.

9. A trench excavating apparatus (10) as claimed in Claim 2, wherein each elongated member support (30) is located at or near one end of the movable body.

10. A trench excavating apparatus (10) as claimed in Claim 2 or 9, wherein one or both elongated member supports (30) are movable relative to the movable body (20) to vary the height of the supported elongated member relative to ground level.

11. A trench excavating apparatus (10) as claimed in Claim 10, including elongated member support adjustment means adapted to vary the height of one or both of the elongated member supports (30) relative to ground level in response to changes in the measured parameter.

12. A trench excavating apparatus (10) as claimed in Claim 1, wherein the control means is adapted to receive position data relating to the height of at least one elongated member support (30) and to send a signal to move the excavating device (40) In response to the received position data.

13. A method of excavating a trench and placing an elongated member (110) within the excavated trench, the method comprising the steps of:

supporting the elongated member (110) using at least one elongated member support (30);
excavating the trench using an excavating device (40);
measuring a parameter associated with the elongated member (110) as it is supported by the one or more elongated member supports (30); and
**characterised by** using excavating device adjustment means comprising control means and an actuator to respond to changes in the measured parameter and cause the position of the excavating device (40) to be adjusted varying the depth of the excavated trench.

**14.** A method as claimed in Claim 13, including supporting the elongated member (110) using at least two elongated member supports (30) which are spaced apart along the longitudinal axis of the elongated member (110).

**15.** A method as claimed in Claim 14, including locating the excavating device (40) between the two elongated member supports (30).

**16.** A method as claimed in any of Claims 13 to 15, including moving the excavating device (40) relative to the movable body (20) to provide a varying trench depth.

**17.** A method as claimed in any of Claims 13 to 16, including moving one or more of the elongated member supports (30) relative to the movable body (20) to vary the height of the supported elongated member (110) relative to ground level; and/or including adjusting the height of one or more of the elongated member supports (30) relative to ground level in response to changes in the measured parameter; and/or including adjusting the height of said one or more elongated member supports (30) and moving the excavating device (40) in response to the variation in height of one or both of the elongated member supports.

**Patentansprüche**

**1.** Grabenaushubvorrichtung (10) zum Ausheben eines Grabens und zum Verlegen eines länglichen Elements (110) in dem ausgehobenen Graben, wobei die Vorrichtung Folgendes umfasst:

einen beweglichen Körper (20) mit mindestens einer länglichen Elementstütze (30) zum Tragen des länglichen Elements (110);
ein Aushubgerät (40), das mit dem beweglichen Körper (20) verbunden ist, zum Ausheben des Grabens, wobei das Aushubgerät (40) justierbar ist, um eine variierende Grabentiefe zu ermöglichen;
ein Messmittel zum Messen eines Parameters bezüglich des länglichen Elements (110), während es durch die längliche Elementstütze (30) gestützt wird; und **gekennzeichnet durch**
ein Aushubgerätjustiermittel, das ein Steuerungsmittel und ein Stellglied umfasst, wobei das Steuerungsmittel, in Reaktion auf Veränderungen des gemessenen Parameters, das Stellglied veranlasst, die Position des Aushubgerätes (40) zu justieren, wodurch die Tiefe des ausgehobenen Grabens variiert wird.

**2.** Grabenaushubvorrichtung (10) nach Anspruch 1, die zwei längliche Elementstützen (30) umfasst, und wobei die zwei länglichen Elementstützen entlang der Längsachse des länglichen Elements (110) voneinander beabstandet sind.

**3.** Grabenaushubvorrichtung (10) nach Anspruch 1 oder 2, wobei das Messmittel ein Lastmessmittel umfasst, und wobei der gemessene Parameter die Last umfasst, die durch das längliche Element (110) auf mindestens eine längliche Elementstütze (30) ausgeübt wird; und/oder wobei das Messmittel ein Winkelmessmittel umfasst, und wobei der gemessene Parameter den Winkel des länglichen Elements umfasst, während es durch die längliche Elementstütze (30) gestützt wird; und/oder wobei das Messmittel Verschiebungsmessmittel umfasst, und wobei der gemessene Parameter eine Verschiebung des länglichen Elements umfasst, während es durch die längliche Elementstütze (30) gestützt wird.

**4.** Grabenaushubvorrichtung (10) nach einem der vorangehenden Ansprüche, wobei die Grabenaushubvorrichtung eine Untersee-Grabenaushubvorrichtung ist, und wobei die Grabenaushubvorrichtung bevorzugt schleppfähig ist oder ein Fortbewegungsmittel enthält.

**5.** Grabenaushubvorrichtung (10) nach einem der vorangehenden Ansprüche, wobei das längliche Element (110) ein Rohr oder eine Pipeline umfasst.

**6.** Grabenaushubvorrichtung (10) nach einem der vorangehenden Ansprüche, wobei das Aushubgerät (40) einen mechanischen Bagger umfasst.

**7.** Grabenaushubvorrichtung (10) nach einem der vorangehenden Ansprüche, wobei sich das Aushubgerät (40) von dem beweglichen Körper (20) aus in einem Ausschachtwinkel abwärts erstreckt.

**8.** Grabenaushubvorrichtung (10) nach Anspruch 7, wobei das Aushubgerät (40) schwenkbar an dem beweglichen Körper (20) montiert ist und relativ zu dem beweglichen Körper so geschwenkt werden kann, dass der Ausschachtwinkel variiert wird, um eine variierende Grabentiefe zu ermöglichen.

9. Grabenaushubvorrichtung (10) nach Anspruch 2, wobei jede längliche Elementstütze (30) an oder nahe einem Ende des beweglichen Körpers angeordnet ist.

10. Grabenaushubvorrichtung (10) nach Anspruch 2 oder 9, wobei eine oder beide längliche Elementstützen (30) relativ zu dem beweglichen Körper (20) beweglich sind, um die Höhe des gestützten länglichen Elements relativ zum Bodenniveau zu variieren.

11. Grabenaushubvorrichtung (10) nach Anspruch 10, die ein Justiermittel für die länglichen Elementstützen enthält, das dafür ausgelegt ist, die Höhe eines oder beider länglichen Elementstützen (30) relativ zum Bodenniveau in Reaktion auf Veränderungen des gemessenen Parameters zu variieren.

12. Grabenaushubvorrichtung (10) nach Anspruch 1, wobei das Steuerungsmittel dafür ausgelegt ist, Positionsdaten bezüglich der Höhe mindestens einer länglichen Elementstütze (30) zu empfangen und ein Signal zu senden, um das Aushubgerät (40) in Reaktion auf die empfangenen Positionsdaten zu bewegen.

13. Verfahren zum Ausheben eines Grabens und zum Verlegen eines länglichen Elements (110) in dem ausgehobenen Graben, wobei das Verfahren folgende Schritte umfasst:

Stützen des länglichen Elements (110) unter Verwendung mindestens einer länglichen Elementstütze (30);
Ausheben des Grabens unter Verwendung eines Aushubgerätes (40);
Messen eines Parameters, der mit dem länglichen Element (110) verknüpft ist, während es durch die eine oder die mehreren länglichen Elementstützen (30) gestützt wird; und
**gekennzeichnet durch** die Verwendung eines Aushubgerätjustiermittel, das ein Steuerungsmittel und ein Stellglied umfasst, um auf Veränderungen des gemessenen Parameters zu reagieren und zu veranlassen, dass die Position des Aushubgerätes (40) justiert wird, um die Tiefe des ausgehobenen Grabens zu variieren.

14. Verfahren nach Anspruch 13, welches das Stützen des länglichen Elements (110) unter Verwendung mindestens zweier länglicher Elementstützen (30), die entlang der Längsachse des länglichen Elements (110) voneinander beabstandet sind, enthält.

15. Verfahren nach Anspruch 14, das enthält, das Aushubgerät (40) zwischen den zwei länglichen Elementstützen (30) zu positionieren.

16. Verfahren nach einem der Ansprüche 13 bis 15, das enthält, das Aushubgerät (40) relativ zu dem beweglichen Körper (20) zu bewegen, um eine variierende Grabenriefe zu realisieren.

17. Verfahren nach einem der Ansprüche 13 bis 16, das enthält, eine oder mehrere der länglichen Elementstützen (30) relativ zu dem beweglichen Körper (20) zu bewegen, um die Höhe des gestützten länglichen Elements (110) relativ zum Bodenniveau zu variieren; und/oder das enthält, die Höhe einer oder mehrerer der länglichen Elementstützen (30) relativ zum Bodenniveau in Reaktion auf Veränderungen des gemessenen Parameters zu justieren; und/oder das enthält, die Höhe der einen oder der mehreren länglichen Elementstützen (30) zu justieren und das Aushubgerät (40) in Reaktion auf die Veränderung der Höhe einer oder beider länglichen Elementstützen zu bewegen.

**Revendications**

1. Appareil d'excavation de tranchée (10) pour creuser une tranchée et placer un élément allongé (110) dans la tranchée creusée, l'appareil comprenant :

un corps mobile (20) ayant au moins un support d'élément allongé (30) pour supporter l'élément allongé (110) ;
un dispositif d'excavation (40) relié au corps mobile (20) pour creuser la tranchée, le dispositif d'excavation (40) étant ajustable pour fournir une profondeur de tranchée variable ;
un moyen de mesure pour mesurer un paramètre en rapport avec l'élément allongé (110) puisqu'il est supporté par le support d'élément allongé (30) ; et
**caractérisé en ce que**

le moyen d'ajustement du dispositif d'excavation comprenant un moyen de commande et un actionneur dans lequel ledit moyen de commande, en réponse aux changements du paramètre mesuré, fait que l'actionneur ajuste ainsi la position du dispositif d'excavation (40) pour varier la profondeur de la tranchée creusée.

2. Appareil d'excavation de tranchée (10) tel que revendiqué à la revendication 1, comprenant deux supports d'élément allongé (30), et dans lequel les supports d'élément allongé sont espacés le long de l'axe longitudinal de l'élément allongé (110).

3. Appareil d'excavation de tranchée (10) tel que revendiqué à la revendication 1 ou 2 , dans lequel le moyen de mesure comprend un moyen de mesure de charge, et dans lequel le paramètre mesuré comprend la charge exercée sur le au moins un support d'élément allongé (30) par l'élément allongé (110) ; et/ou le moyen de mesure comprend un moyen de mesure d'angle, et dans lequel le paramètre mesuré comprend l'angle de l'élément allongé et est supporté par le support d'élément allongé (30) ; et/ou le moyen de mesure comprend un moyen de mesure du déplacement, et dans lequel le paramètre mesuré comprend un déplacement de l'élément allongé puisqu'il est supporté par le support de l'élément allongé (30).

4. Appareil d'excavation de tranchée (10) tel que revendiqué dans l'une quelconque des revendications précédentes, dans lequel l'appareil d'excavation de tranchée est un appareil d'excavation de tranchée sous-marin, et préférablement dans lequel l'appareil d'excavation de tranchée est tractable ou inclut un moyen de locomotive.

5. Appareil d'excavation de tranchée (10) tel que revendiqué dans l'une quelconque des revendications précédentes, dans lequel l'élément allongé (110) comprend une canalisation ou un pipeline.

6. Appareil d'excavation de tranchée (10) tel que revendiqué dans l'une quelconque des revendications précédentes, dans lequel le dispositif d'excavation (40) comprend une pelle mécanique.

7. Appareil d'excavation de tranchée (10) tel que revendiqué dans l'une quelconque des revendications précédentes, dans lequel le dispositif d'excavation (40) se prolonge vers le bas depuis le corps mobile (20) à un angle de creusement.

8. Appareil d'excavation de tranchée (10) tel que revendiqué dans la revendication 7, dans lequel le dispositif d'excavation (40) est monté de manière pivotable sur le corps mobile (20) et est pivotable par rapport au corps mobile de manière à ajuster l'angle de creusement pour fournir une profondeur de tranchée variable.

9. Appareil d'excavation de tranchée (10) tel que revendiqué dans la revendication 2, dans lequel chaque support d'élément allongé (30) est situé sur ou près d'une extrémité du corps mobile.

10. Appareil d'excavation de tranchée (10) tel que revendiqué dans la revendication 2 ou 9, dans lequel un ou les deux supports de l'élément allongé (30) sont mobiles par rapport au corps mobile (20) pour faire varier la hauteur de l'élément allongé supporté par rapport au niveau du sol.

11. Appareil d'excavation de tranchée (10) tel que revendiqué dans la revendication 10, incluant un moyen d'ajustement du support de l'élément allongé pour faire varier la hauteur d'un ou des deux supports d'élément allongé (30) par rapport au niveau du sol en réponse aux changements dans le paramètre mesuré.

12. Appareil d'excavation de tranchée (10) tel que revendiqué dans la revendication 1, dans lequel le moyen de commande est apte à recevoir des données de position en rapport avec la hauteur du au moins un support d'élément allongé (30) et à envoyer un signal pour déplacer le dispositif d'excavation (40) en réponse aux données de position reçues.

13. Procédé d'excavation d'une tranchée et de placement d'un élément allongé (110) dans la tranchée creusée, le procédé comprenant les étapes de :

support de l'élément allongé (110) en utilisant au moins un support d'élément allongé (30) ;
excavation de la tranchée en utilisant un dispositif d'excavation (40) ;
mesure d'un paramètre associé à l'élément allongé (110) puisqu'il est supporté par un ou plusieurs supports d'élément allongé (30) ; et
**caractérisé en ce que**

utilisation du moyen d'ajustement du dispositif d'excavation comprenant un moyen de commande et un actionneur pour répondre aux changements du paramètre mesuré, et faire que la position du dispositif d'excavation (40) soit ajustée en variant la profondeur de la tranchée creusée.

**14.** Procédé tel que revendiqué à la revendication 13, incluant le support de l'élément allongé (110) en utilisant au moins deux supports d'élément allongé (30) qui sont espacés le long de l'axe longitudinal de l'élément allongé (110).

**15.** Procédé tel que revendiqué dans la revendication 14, incluant l'emplacement du dispositif d'excavation (40) entre les deux supports d'élément allongé (30).

**16.** Procédé tel que revendiqué dans la revendication 13 à 15, incluant le déplacement du dispositif d'excavation (40) par rapport au corps mobile (20) pour fournir une profondeur de tranchée variable.

**17.** Procédé tel que revendiqué dans l'une quelconque des revendications 13 à 16, incluant le déplacement d'un ou plusieurs supports d'élément allongé (30) en rapport avec le corps mobile (20) pour faire varier la hauteur de l'élément allongé supporté (110) par rapport au niveau du sol ; et/ou incluant l'ajustement de la hauteur d'un ou plusieurs des supports d'élément allongé (30) par rapport au niveau du sol en réponse aux changements dans le paramètre mesuré, et/ou incluant l'ajustement de la hauteur dudit un ou plusieurs supports d'élément allongé (30) et le déplacement du dispositif d'excavation (40) en réponse à la variation de hauteur d'un ou plusieurs supports d'élément allongé.

# Fig. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6016616 A

- US 4280289 A